# FASCICULE DE BREVET EUROPEEN

(11) **EP 0 940 591 B1**
(45) Date de publication et mention de la délivrance du brevet: **11.02.2004**
(21) Numéro de dépôt: 99400466.1
(22) Date de dépôt: 24.02.1999
(51) Int. Cl.: F16C 11/06, E05F 1/10, F16C 1/26

(54) **Articulation à rotule comprenant des moyens à décrochage rapide**
Schnellentkupplungsmechanismus für ein Kugelgelenk
Ball joint with quick release coupling means

(30) Priorité: 06.03.1998 FR 9802755
(43) Date de publication de la demande: 08.09.1999
(73) Titulaire: Teleflex Automotive France SA, 74300 Cluses (FR)
(72) Inventeur: Rapin, Georges, 74300 Thiez (FR)
(74) Mandataire: Ramey, Daniel

(56) Documents cités:
- EP-A- 0 768 473
- EP-A- 0 814 274

## Description

L'invention concerne une articulation à rotule, telle par exemple que celles utilisées sur des embouts de câbles ou dans les tringleries de commande pour véhicules automobiles.

De façon connue, une articulation de ce type comprend un coussinet formé avec un logement de réception de la rotule et un boîtier ou une cage dans lequel le coussinet est monté coulissant et est chargé par un ressort vers une position de service ou d'utilisation normale où le bord du coussinet est en appui sur un rebord du boîtier pour s'opposer à l'extraction de la rotule.

Cette configuration permet un montage facile de la rotule par poussée dans le coussinet, ce qui provoque le déplacement du coussinet vers le fond du boîtier en comprimant le ressort précité, le bord du coussinet étant alors écarté du rebord du boîtier et pouvant être expansé radialement sous l'effet de la poussée appliquée par la rotule. Inversement, une traction sur la rotule a pour effet de coincer le bord du coussinet entre la rotule et le rebord du boîtier de sorte que le bord du coussinet ne peut plus être expansé radialement par la rotule et s'oppose à l'extraction de celle-ci.

Cette articulation connue a donc pour avantage de permettre un montage facile de la rotule dans le coussinet par application d'une force de poussée relativement faible à la rotule et de garantir le maintien en place de la rotule dans le coussinet lors de l'utilisation normale de l'articulation. Par contre, lorsqu'il devient nécessaire d'extraire la rotule du coussinet, la force de traction qu'il faut appliquer à la rotule est relativement très élevée et l'extraction de la rotule peut provoquer un arrachement ou une détérioration du bord du coussinet.

De plus, lorsque le boîtier de l'articulation est monté sur un élément de tringlerie par l'intermédiaire d'une couche de caoutchouc destinée à amortir les vibrations et à empêcher leur transmission, l'extraction de la rotule provoque souvent l'arrachement de cette couche de caoutchouc.

L'invention a notamment pour but d'éviter les inconvénients précités, grâce à une solution simple, efficace et peu coûteuse.

Elle a pour objet une articulation à rotule du type précité, permettant un montage de la rotule dans le coussinet avec un effort faible, s'opposant à l'extraction de la rotule dans des conditions normales d'utilisation de l'articulation et comprenant des moyens particuliers facilitant l'extraction de la rotule lorsque cela est nécessaire.

Elle propose, à cet effet, une articulation à rotule du type décrit, comprenant un coussinet formé avec un logement de réception d'une rotule et un boîtier dans lequel le coussinet est monté coulissant et est poussé par un ressort dans une position de service où il s'oppose à l'extraction de la rotule, caractérisé en ce qu'elle comprend des moyens pour déplacer le coussinet dans le boîtier à l'encontre de l'action du ressort et pour le maintenir à distance de sa position de service dans une position d'extraction de la rotule.

Dans cette position, le bord du coussinet délimitant l'orifice d'introduction de la rotule dans le logement précité est écarté de la paroi interne du boîtier et est radialement expansible par traction sur la rotule.

L'invention permet donc un montage facile de la rotule par poussée à l'intérieur du coussinet avec un effort relativement faible, un maintien de la rotule à l'intérieur du coussinet dans des conditions normales d'utilisation de l'articulation, et une extraction facile de la rotule par traction, lorsque le coussinet est amené et maintenu dans une position particulière.

Selon une autre caractéristique de l'invention, les moyens précités de déplacement du coussinet sont formés sur le coussinet et sur le boîtier et comprennent des rampes hélicoïdales permettant d'écarter le coussinet de sa position de service par simple rotation autour de son axe.

Dans un mode de réalisation préféré de l'invention, les rampes hélicoïdales sont formées sur une queue axiale du coussinet qui s'étend à l'opposé de la rotule à travers un orifice du fond du boîtier et elles coopèrent avec le bord de cet orifice.

Avantageusement la queue axiale du coussinet est à section transversale non circulaire, l'orifice du fond du boîtier ayant une forme non circulaire conjuguée de celle de la section transversale de la queue du coussinet.

Le coussinet peut alors être déplacé de sa position de service dans sa position d'extraction de la rotule par rotation d'un quart de tour autour de son axe.

Une rotation d'un quart de tour dans le sens opposé suffit pour ramener le coussinet en position de service.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale partielle d'une articulation à rotule selon l'invention ;
- la figure 2 est une vue de dessus de cette articulation.

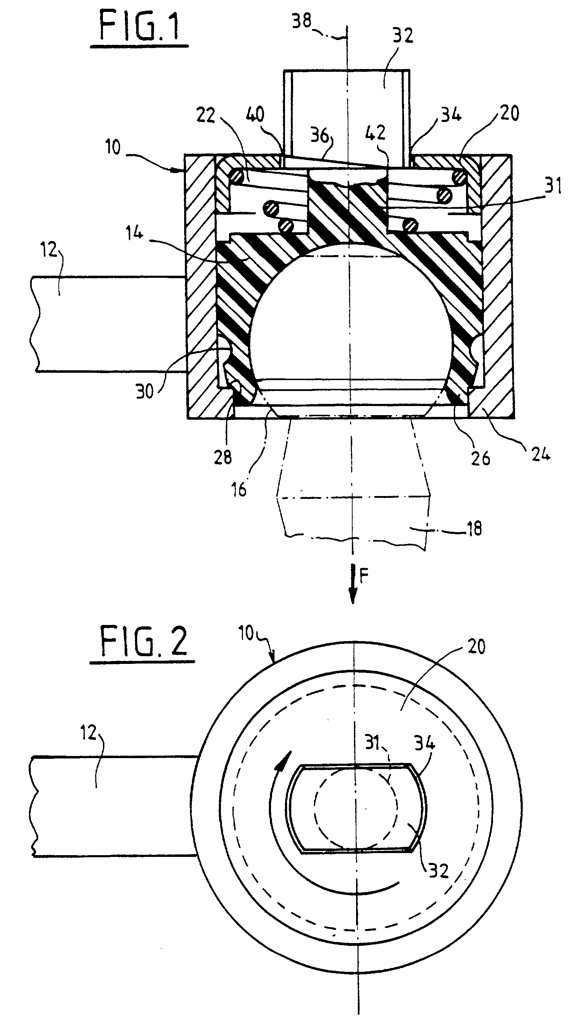

L'articulation à rotule représentée schématiquement aux figures 1 et 2 est destinée à être montée sur un embout de câble ou dans une tringlerie de commande, par exemple de boîte de vitesses pour véhicule automobile et comprend essentiellement un boîtier ou une cage 10 solidaire d'un élément 12, un coussinet 14 monté coulissant à l'intérieur du boîtier 10 et une rotule 16 (représentée en traits fantômes en figure 1) montée dans le coussinet 14 et solidaire d'une tige 18.

Le boîtier 10 est réalisé par exemple en métal ou éventuellement en matière plastique et est de forme cylindrique ouverte à ses deux extrémités, son extrémité opposée à la rotule 16 étant fermée par un couvercle rapporté 20, par exemple métallique, monté à force à l'intérieur du boîtier 10 et bloqué dans celui-ci par déformation d'une partie de l'extrémité correspondante du boîtier 10.

Un ressort conique 22 est interposé entre le couvercle 20 et le fond du coussinet 14 pour pousser ce dernier vers l'extrémité opposée du boîtier 10, en appui sur un rebord radialement interne 24 de cette extrémité du boîtier. Comme on le voit en figure 1, le bord 26 du coussinet, qui entoure l'orifice du logement formé dans le coussinet pour la réception de la rotule 16, comporte sur sa face extérieure une rainure ou un décrochement périphérique 28 qui vient s'engager sur l'arête du rebord 24 du boîtier et qui définit ainsi une position d'appui stable du coussinet 14 sur le rebord 24, le coussinet étant poussé et maintenu dans cette position par le ressort 22.

Par ailleurs, pour augmenter l'élasticité du bord 26 du coussinet, une gorge périphérique 30 est formée dans la face extérieure du coussinet, au niveau d'un plan diamétral transversal de la rotule 16.

L'extrémité du coussinet qui est opposée au bord 26 précité et sur laquelle s'appuie le ressort 22, est reliée par une tige cylindrique 31 à une queue axiale 32 qui s'étend à l'extérieur du boîtier 10 à travers un orifice 34 du couvercle 20.

La queue axiale 32 est à section transversale non circulaire, par exemple sensiblement rectangulaire comme représenté en figure 2, l'orifice 34 du couvercle 20 ayant une forme similaire conjuguée de la forme en section transversale de la queue axiale 32, et la tige cylindrique 31 ayant un diamètre ou une dimension transversale légèrement inférieure à la largeur ou plus petite dimension transversale de l'orifice 34 pour pouvoir tourner dans cet orifice.

Une rampe hélicoïdale 36 est formée sur deux faces opposées de la queue axiale 32, par exemple sur un peu plus de 90° autour de l'axe 38 du coussinet, et est destinée à coopérer avec le bord de l'orifice 34 du couvercle 20 en prenant appui sur ce bord du côté extérieur au boîtier 10.

Pour cela, chaque rampe 36 s'étend sur la queue axiale 32 du coussinet entre un point 40 qui se trouve au niveau de la face extérieure du couvercle 20 quand le coussinet est dans sa position de service représentée en figure 1, et un point 42 qui se trouve à l'intérieur du boîtier 10 à la jonction avec la tige 31 et qui est axialement écarté du point 40 d'une distance de quelques millimètres, correspondant à la distance dont il faut déplacer le coussinet 14 le long de son axe 38 à l'encontre de l'action du ressort 22 pour dégager le bord 26 du coussinet du rebord 24 du boîtier.

Ainsi, lorsque l'on fait tourner la queue axiale 32 d'un quart de tour environ autour de l'axe 38 du coussinet, chaque rampe 36 prend appui (sous l'action du ressort 22) sur le bord de l'orifice 34 du couvercle 20 pour déplacer le coussinet 14 à l'intérieur du boîtier 10 en rotation autour de son axe 38 et en translation le long de cet axe pour l'amener dans une position où le ressort conique 22 est partiellement comprimé et où le bord 26 du coussinet est dégagé du rebord 24 du boîtier pour permettre l'extraction de la rotule 10 par traction sur la tige 18.

Le montage de cette articulation est des plus simples :

on place le coussinet 14 et le ressort 22 à l'intérieur du boîtier 10, on pose le couvercle 20 en place et on le bloque, puis on présente la rotule 16 devant l'ouverture délimitée par le bord 26 du coussinet et on pousse la rotule 16 à l'intérieur du coussinet le long de l'axe 38 de celui-ci. Sous l'effet de cette poussée, le coussinet se déplace en translation à l'intérieur du boîtier 10 en comprimant le ressort 22, par exemple jusqu'à ce que l'extrémité correspondante du coussinet 14 vienne en butée sur le rebord du couvercle 20. Dans cette position, le rebord 26 du coussinet est dégagé du rebord 24 du boîtier et peut s'expanser vers l'extérieur sous l'effet de la poussée de la rotule, cette expansion étant facilitée par la gorge périphérique 30 de la face extérieure du coussinet.

Lorsque la rotule 16 est en place à l'intérieur du coussinet comme représenté en figure 1, le coussinet peut être ramené dans sa position de service par le ressort 22.

Dans cette position, une traction sur la tige 18 de la rotule dans le sens indiqué par la flèche F en figure 1 va avoir pour effet d'appliquer encore plus fermement le bord 26 du coussinet sur le rebord 24 du boîtier, tout élargissement radial de ce bord 26 étant empêché. L'extraction de la rotule 16 hors du coussinet est ainsi rendue impossible ou très difficile dans les conditions d'utilisation normale de l'articulation.

Lorsqu'il faut, pour une raison de maintenance ou autre, démonter la rotule 16, il suffit d'exercer un couple sur la queue axiale 32 du coussinet pour faire tourner celui-ci d'environ 90° autour de son axe 38.

L'appui des rampes hélicoïdales 36 sur les bords de l'orifice 34 du couvercle 20 a pour effet de déplacer axialement le coussinet 14 à l'intérieur du boîtier 10, sur une distance suffisante pour dégager le bord 26 du rebord 24. Le coussinet 14 étant maintenu dans cette position par les rampes hélicoïdales 36 qui sont en appui sur le bord extérieur de l'orifice 34 du couvercle 20, on peut tirer sur la rotule dans le sens indiqué par la flèche F et l'extraire sans difficulté du coussinet 14 dont le bord 26 peut être déformé radialement vers l'extérieur de la même façon que pour le montage de la rotule dans le coussinet.

Par exemple, l'effort de montage de la rotule à l'intérieur du coussinet peut être inférieur à 5-10 daN environ, l'effort d'extraction de la rotule dans la position de service du coussinet représentée en figure 1 peut être compris entre 50 et 150 daN, l'effort d'extraction de la rotule quand le coussinet a été amené dans sa position d'extraction par rotation d'un quart de tour étant du même ordre que l'effort de montage de la rotule.

De façon connue, le coussinet 14 peut être fendu parallèlement à son axe 38 en un point de sa périphérie, pour éviter tout risque de blocage par dilatation thermique différentielle à l'intérieur du boîtier 10.

Par ailleurs, le boîtier 10 peut être relié à la tringle 12 par l'intermédiaire d'une enveloppe de caoutchouc ou de matière analogue permettant d'amortir les vibrations et d'éviter leur transmission.

Les moyens qui ont été décrits et représentés pour le déplacement du coussinet 14 de sa position de service dans sa position d'extraction de la rotule peuvent être modifiés de façon évidente pour l'homme du métier. Par exemple, lorsque la force développée par le ressort 22 n'est pas trop élevée, les rampes hélicoïdales 36 peuvent être supprimées. Dans ce cas, on fait passer le coussinet 14 de sa position de service dans sa position d'extraction de la rotule par traction sur la queue axiale 32 puis par rotation d'un quart de tour autour de l'axe 38 du coussinet.

## Revendications

1. Articulation à rotule, comprenant un coussinet (14) formé avec un logement de réception d'une rotule (16) et un boîtier (10) dans lequel le coussinet est monté coulissant et est poussé par un ressort (22) dans une position de service où il s'oppose à l'extraction de la rotule (16), **caractérisé en ce qu'**elle comprend des moyens (32, 34, 36) pour déplacer le coussinet (14) dans le boîtier (10) à l'encontre de l'action du ressort (22) et pour le maintenir à distance de sa position de service dans une position d'extraction de la rotule.

2. Articulation selon la revendication 1, **caractérisée en ce que**, dans la position d'extraction de la rotule, le bord (26) du coussinet délimitant l'orifice d'introduction de la rotule dans le logement précité est écarté de la paroi interne du boîtier (10) et est radialement expansible par traction sur la rotule.

3. Articulation selon la revendication 1 ou 2, **caractérisée en ce que** les moyens précités de déplacement sont formés sur le coussinet (14) et sur le boîtier (10) et comprennent des rampes hélicoïdales (36) permettant d'écarter le coussinet de sa position de service par rotation du coussinet autour de son axe (38).

4. Articulation selon la revendication 3, **caractérisée en ce que** les rampes hélicoïdales (36) sont formées sur le coussinet (14) et sont appliquées sur une partie fixe du boîtier (10) par le ressort (22) précité.

5. Articulation selon la revendication 3 ou 4, **caractérisée en ce que** les rampes hélicoïdales (36) sont formées sur une queue axiale (32) du coussinet qui s'étend à l'opposé du logement de la rotule (16) à travers un orifice (34) du couvercle (20) du boîtier, et coopèrent avec le bord de cet orifice.

6. Articulation selon la revendication 5, **caractérisée en ce que** la queue axiale (32) du coussinet est à section transversale non circulaire, par exemple sensiblement rectangulaire, l'orifice (34) du couvercle du boîtier ayant une forme non circulaire conjuguée de celle de la section transversale de la queue du coussinet.

7. Articulation selon la revendication 6, **caractérisée en ce que** la queue axiale (32) du coussinet est reliée à ce dernier par une tige cylindrique (31) dont la dimension transversale est inférieure à la plus faible dimension transversale de l'orifice (34) du couvercle (20) du boîtier.

8. Articulation selon l'une des revendications 3 à 7, **caractérisée en ce que** le coussinet (14) est déplacé de sa position de service dans une position d'extraction de la rotule par rotation d'un quart de tour environ autour de son axe (38).

9. Articulation selon l'une des revendications précédentes, **caractérisée en ce que** l'effort d'extraction de la rotule (16) quand le coussinet (14) est dans sa position d'extraction est sensiblement du. même ordre que l'effort de montage de cette rotule dans le coussinet.

## Claims

1. Ball joint, comprising a bearing (14), formed with a housing for receiving a ball (16), and a casing (10) in which the bearing is fitted slidably and is pushed by a spring (22) into an operating position in which it opposes the extraction of the ball (16), **characterized in that** it comprises means (32, 34, 36) for moving the bearing (14) in the casing (10) against the action of the spring (22) and for keeping it at a distance from its operating position, in a position in which the ball can be extracted.

2. Joint according to Claim 1, **characterized in that**, in the ball extraction position, the edge (26) of the bearing delimiting the aperture for the insertion of the ball into the aforesaid housing is separated from the inner wall of the casing (10) and is radially expandable when the ball is pulled.

3. Joint according to Claim 1 or 2, **characterized in that** the aforesaid movement means are formed on the bearing (14) and on the casing (10) and comprise helical inclines (36) for moving the bearing away from its operating position by rotating the bearing about its axis (38).

4. Joint according to Claim 3, **characterized in that** the helical inclines (36) are formed on the bearing (14) and are pressed against a fixed part of the casing (10) by the aforesaid spring (22).

5. Joint according to Claim 3 or 4, **characterized in that** the helical inclines (36) are formed on an axial tail (32) of the bearing, which extends in the direction away from the housing of the ball (16) through an aperture (34) in the cover (20) of the casing, and interact with the edge of this aperture.

6. Joint according to Claim 5, **characterized in that** the axial tail (32) of the bearing has a cross section which is non-circular, being approximately rectangular for example, the aperture (34) in the cover of the casing having a non-circular shape matching that of the cross section of the bearing tail.

7. Joint according to Claim 6, **characterized in that** the axial tail (32) of the bearing is connected to the bearing by a cylindrical shank (31) whose transverse dimension is smaller than the smallest transverse dimension of the aperture (34) in the cover (20) of the casing.

8. Joint according to one of Claims 3 to 7, **characterized in that** the bearing (14) is moved from its operating position to the ball extraction position by a rotation of approximately one quarter turn about its axis (38).

9. Joint according to one of the preceding claims, **characterized in that** the force required to extract the ball (16) when the bearing (14) is in its extraction position is approximately of the same order as the force required to fit this ball in the bearing.

## Patentansprüche

1. Kugelgelenklager umfassend ein Lager (14), ausgebildet mit einer Lageranordnung zur Aufnahme eines Kugelgelenks (16) und einem Gehäuse (10), in dem das Lager verschiebbar montiert ist und durch eine Feder (22) in eine Betriebsposition gedrückt wird, in der es sich der Entnahme des Kugelgelenks (16) widersetzt, **dadurch gekennzeichnet, dass** es Mittel umfasst (32, 34, 36), um das Lager (14) in dem Gehäuse (10) entgegen der Wirkung der Feder (22) zu verschieben und um es in einem Abstand zu seiner Betriebsposition in einer Entnahmeposition des Kugelgelenks zu halten.

2. Gelenklager gemäß Anspruch 1, **dadurch gekennzeichnet, dass** der Rand (26) des Lagers, der die Öffnung zum Einführen des Kugelgelenks in die vorgenannte Lageranordnung begrenzt, in der Entnahmeposition des Kugelgelenks von der Innenwandung des Gehäuses (10) beabstandet ist und durch Zug an dem Kugelgelenk radial dehnbar ist.

3. Gelenklager gemäß Anspruch 1 oder 2, **dadurch gekennzeichnet, dass** die vorgenannten Mittel zum Verschieben auf dem Lager (14) und auf dem Gehäuse (10) ausgebildet sind und schraubenförmige Rampen (36) umfassen, die es erlauben, das Lager aus seiner Betriebsposition durch Rotation des Lagers um seine Achse (38) zu entfernen.

4. Gelenklager gemäß Anspruch 3, **dadurch gekennzeichnet, dass** die schraubenförmigen Rampen (36) auf dem Lager (14) ausgebildet sind und an einen festen Teil des Gehäuses (10) durch die vorgenannte Feder (22) angelegt sind.

5. Gelenklager gemäß Anspruch 3 oder 4, **dadurch gekennzeichnet, dass** die schraubenförmigen Rampen (36) auf einem axialen Zapfen (32) des Lagers ausgebildet sind, der sich auf der Gegenseite der Lageranordnung des Kugelgelenks (16) quer über eine Öffnung (34) des Deckels (20) des Gehäuses erstreckt, und mit dem Rand dieser Öffnung zusammenwirken.

6. Gelenklager gemäß Anspruch 5, **dadurch gekennzeichnet, dass** der axiale Zapfen (32) des Lagers einen nicht kreisförmigen, beispielsweise genau rechteckigen, Querschnitt hat, wobei die Öffnung (34) des Deckels des Gehäuses eine nicht kreisförmige Form hat, die an die des Querschnitts des Zapfens des Lagers angepasst ist.

7. Gelenklager gemäß Anspruch 6, **dadurch gekennzeichnet, dass** der axiale Zapfen (32) des Lagers mit letzterem über einen zylindrischen Stift (31) verbunden ist, dessen Querausdehnung geringer ist als die geringste Querausdehnung der Öffnung (34) des Deckels (20) des Gehäuses.

8. Gelenklager gemäß einem der Ansprüche 3 bis 7, **dadurch gekennzeichnet, dass** das Lager (14) aus seiner Betriebsposition in eine Entnahmeposition des Kugelgelenks durch Rotation um ungefähr eine viertel Umdrehung um seine Achse (38) verschoben wird.

9. Gelenklager gemäß einem der vorhergehenden Ansprüche, **dadurch gekennzeichnet, dass** die Belastung zur Entnahme des Kugelgelenks (16) in genau derselben Größenordnung wie die Belastung zur Montage dieses Kugelgelenks in dem Lager ist, wenn das Lager (14) in seiner Entnahmeposition ist.
